**Europäisches Patentamt**

**European Patent Office**

**Office européen des brevets**

(11) Publication number: **0 105 986**
**A1**

(12) **EUROPEAN PATENT APPLICATION**

(21) Application number: **82305436.6**

(22) Date of filing: **13.10.82**

(51) Int. Cl.³: **F 02 B 23/08**

(43) Date of publication of application: **25.04.84**
Bulletin 84/17

(84) Designated Contracting States: **DE FR GB IT SE**

(71) Applicant: **Chen, Jin–Jin, No. 69, Chung Shin Road Nan Lu Li, Tien Chung Cheng Chang Hua Hsien (TW)**
Applicant: **Jan, Shi-Chuan, No. 69, Chung Shin Road Nan Lu Li, Tien Chung Cheng Chang Hua Hsien (TW)**

(72) Inventor: **Chen, Jin–Jin, No. 69, Chung Shin Road Nan Lu Li, Tien Chung Cheng Chang Hua Hsien (TW)**
Inventor: **Jan, Shi-Chuan, No. 69, Chung Shin Road Nan Lu Li, Tien Chung Cheng Chang Hua Hsien (TW)**

(74) Representative: **Hallam, Arnold Vincent et al, E.N. LEWIS & TAYLOR 144 New Walk, Leicester LE1 7JA (GB)**

(54) **Combustion engine with concave piston top and convex cylinder head.**

(57) An improved reciprocating internal combustion engine of the type having a cylinder (3) with a cylinder head (2) and a piston (1) capable of reciprocating for running four stroke or two stroke operation upon combustion of an air-fuel mixture, characterized in that the top surface (31) of the piston (1) is concaved toward the center thereof and the opposing surface (21) of the cylinder head (2) is correspondingly convexed so that the explosion pressure can be concentrated at the top surface (31) of the piston (1).

0105986
TITLE MODIFIED
see front page

IMPROVED INTERNAL COMBUSTION ENGINE FOR FUEL SAVING

This invention relates ·to a reciprocating internal combustion engine, particularly to reciprocating internal combustion engine which includes a piston of improved construction and better performanace.

Conventionally, the top surface of the piston head, against which the explosive force is exerted is usually flat or convex while the opposing inner surface of the cylinder head are concave. Such structure includes an undesirable effect that the component part of the explosion force will wear the piston rings, thus reducing the sealing effect, as well as resulting the deterioration of the engine performance. Furthermore the convex surface of the piston may cause dissipation of force which do not produce power, thereby resulting a decrease in the engine efficiency.

It is therefore a general object of the present invention to provide an improved internal combustion engine with less fuel comsumption and better engine performance.

It is a further object of the present invention to provide an improved internal engine in which a large portion of the explosion force can be concentrated on the top surface of the piston.

It is another object of the present invention to provide an improvement to the internal combustion, by which the piston rings can perform their duty with a longer servic life.

According to this invention, an improved reciprocating internal combustion engine of the type having a cylinder with a cylinder head and a piston capable of reciprocating in the cylinder for running four stroke or two stroke operation upon combustion of air fuel mixture, characterized in that the top surface of the piston is concaved toward the center thereof and the opposing surface of the cylinder head is correspondingly convexed so that the explosion pressure can be concentrated at the top surface of said piston.

In still further aspect of the invention, a first concavity is further formed on the top concave surface of the piston and a seccond concavity is formed in the opposing inner surface of the cylinder head.

The present invention will be described in connection with the embodiment thereof with reference to the accompanying drawing in the following.

Fig. 1 shows a section view of an improved internal combustion engine according to this invention.

Fig. 2 is a torque-engine speed diagram for the engines both in a prior art and in the present invention.

Fig. 3 is a graph shows the relationship between the brake horse power and engine speed of the engine in a prior art and in the present invention.

Fig. 4 is a graph shows the relationship between the fuel consumption and the engine speed of the engines in the prior art and in the present invention.

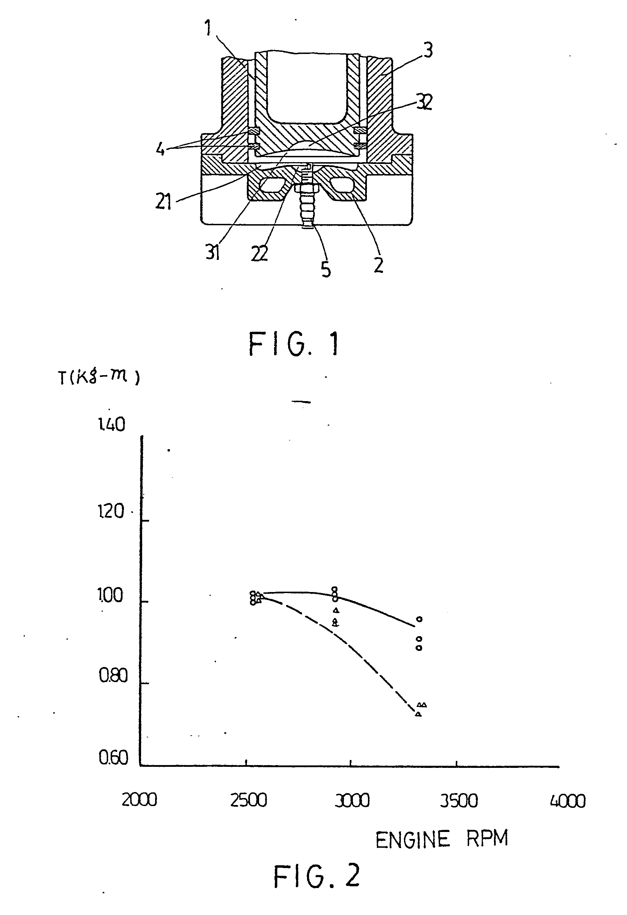

Referring to figure 1 of the drawings, there is shown a portion of an internal combustion engine which includes a cylinder 3 and a piston 1 constructed according to the invention. In the cylinder head 2 is a spark plug 5 provided for igniting a mixture of air and fuel gas which will be taken into the cylinder 3. Two sealing rings 4 are provided in the clearance between the inner wall of the cylinder 3 and the periphery of the piston 1.

As embodied herein, the top surface 31 of the piston 1 is concaved toward its center and the opposing inner surface 21 of the cylinder head 2 is convexed correspondingly. Furthermore, in accordance with the preferred embodiment as shown, a concavity 32 is further provided on the center of the top concave surface 31 of the piston 1 and a concavity 22 correspondingly provided on the convex surface 21 of the cylinder head 2, so that a substantially arctuated combustion chamber is formed in the cylinder 3 above the pistion 1 where the burning of air-fuel mixture occurs.

As described above, the present invention provides a particular structure for the pistion of the reciprocating internal combustion engine as above mentioned. Due to the substantially concave surface 31 of the piston, the

0105986

explosion force will concentrate at the top surface 31 of the piston head. The lateral portions of the concave surface 31 functions as a barrier to prevent the dissipation of the explosion force toward the pistion rings 4 and the clearance between the opposing surfaces of the cylinder wall and piston, thereby decreasing the wearing of the piston rings 4.

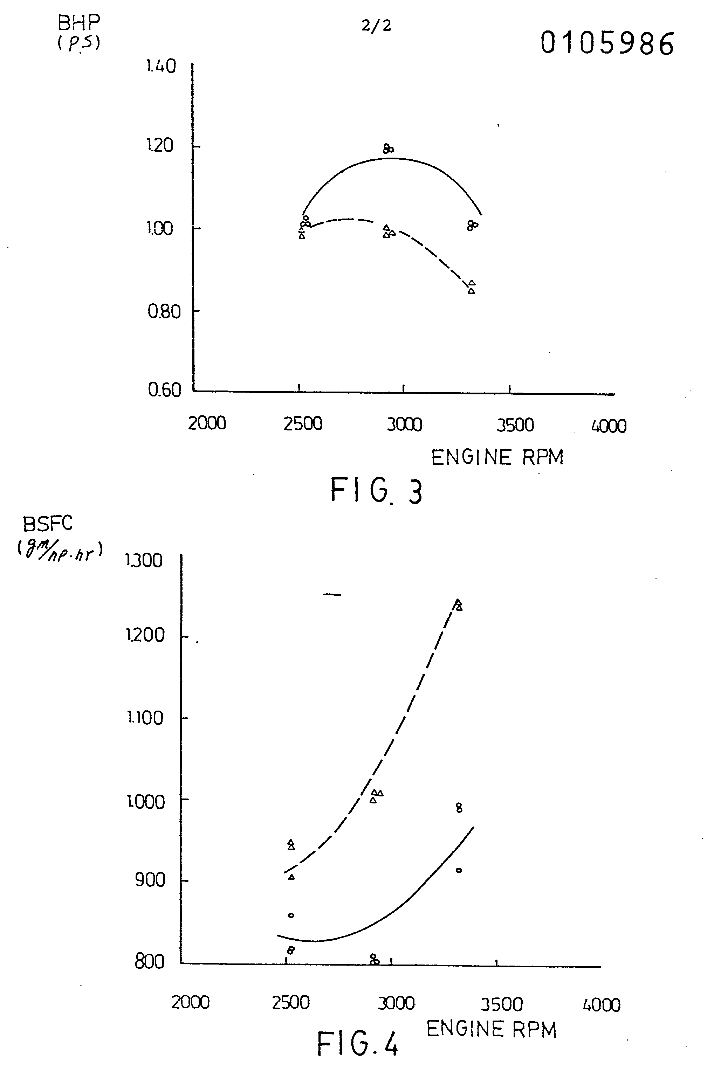

It was appreciated that these improved forms of the piston and the cylinder head can devlope the engine performance after tests were made on an engine which has a piston and a cylinder head constructed according to the invention. Figs 2, 3, 4 are diagrams which compare the performances of an engine with conventional piston and cylinder head and an engine with the piston and cylinder head constructed according to the invention. The dotted lines represent the former and the solid lines represent the later. In figures 2 and 3 the solid lines are plotted at higher level than the dotted lines and this shows the torque and brake horse power of the engine with the improved piston and cylinder head are higher than the other one. In Fig. 3, the solid line is lower than the dotted line, thus showing that the fuel comsumption of the engine with the improved piston and cylinder head is less than the other one.

Thus, it is seen from the above description, the present invention provides an improved reciprocating internal combustion engine. While it should be noted that

0105986.

the illustration and description of this invention are merely based on specific embodiment, it is to be understood that numerous changes and modifications may be made therein without departing from spirit and scope of the invention as defined in the appended claims.

0105986

CLAIMS

1.  An improved internal combustion engine of the type having a cylinder 3 with a cylinder head 2 and a piston 1 capable of reciprocating for running four stroke or two stroke operation upon combustion of an air-fuel mixture, characterized in that the top surface 31 of said piston 1 is concaved toward the center thereof and the opposing surface 21 of said cylinder head 2 is correspondingly convexed so tht the explosion pressure can be concentrated at the top surface of said piston.

2.  An improved internal combustion engine as claimed in Claim 1, wherein the concave top surface 31 of said piston is further provided with a first concavity 32 substantially at the center thereof, and the convex surface 21 of said cylinder head 2 is further provided with a second concavity 22 substantially at the center thereof.

FIG. 1

FIG. 2

0105986

FIG. 3

FIG. 4

# 0105986

European Patent Office

**EUROPEAN SEARCH REPORT**

Application number

EP 82 30 5436

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 357 733 (CHRYSLER) * Page 1, lines 1-4,15-29; page 3, lines 28-32; figure 5 * | 1 | F 02 B 23/08 |
| X | FR-A-2 178 451 (THERY) * Page 1, lines 1-20,32-38; page 2, lines 10-20 * | 1,2 | |
| A | US-A-2 749 900 (MITCHELL) * Column 2, lines 42-53 * | 1 | |
| A | AUTOMOBIL-TECHNISCHE ZEITSCHRIFT, vol. 67, no. 3, March 1965, pages 71-76, Stuttgart, DE MEZGER: "Der Porsche-Achtzylinder-Boxermotor" * Page 76, figure 18 * | | |
| | | | **TECHNICAL FIELDS SEARCHED (Int. Cl. ³)** |
| A | US-A-1 891 326 (HEAD) * Page 1, lines 62-78,85-89 * | 1 | F 02 B F 02 F |

The present search report has been drawn up for all claims

| Place of search THE HAGUE | Date of completion of the search 09-06-1983 | Examiner JORIS J.C. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82